# EUROPÄISCHE PATENTSCHRIFT

(11) **EP 2 100 041 B1**
(45) Veröffentlichungstag und Bekanntmachung des Hinweises auf die Patenterteilung: **12.06.2019**
(21) Anmeldenummer: 07819536.9
(22) Anmeldetag: 02.11.2007
(51) Int. Cl.: F04D 13/06

(54) **MOTORKREISELPUMPE**
MOTOR CENTRIFUGAL PUMP
POMPE CENTRIFUGE MOTORISÉE

(30) Priorität: 14.11.2006 DE 102006053479
(43) Veröffentlichungstag der Anmeldung: 16.09.2009
(73) Patentinhaber: WILO SE, 44263 Dortmund (DE)
(72) Erfinder: DÜRRER, Bernd, 59439 Holzwickede (DE); BOUILLY, Hervé, F-53940 Le Genest St. Isle (FR)
(74) Vertreter: Cohausz Hannig Borkowski Wißgott
(86) Internationale Anmeldenummer: PCT/EP2007/009509
(87) Internationale Veröffentlichungsnummer: WO 2008/058639

(56) Entgegenhaltungen:
- DE-A1- 3 803 774
- DE-A1- 19 748 866
- GB-A- 886 956

## Beschreibung

Die Erfindung betrifft eine Motorkreiselpumpe mit einem im Pumpenraum gelagerten Laufrad, das auf der Elektromotorenwelle sitzt, wobei der Motorenrotor in einer Spaltrohrkammer einliegt, die von der Förderflüssigkeit durchströmt ist, und der Pumpenraum von der Kammer durch eine Trennwand getrennt ist, die mindestens eine Durchflussöffnung für die Förderflüssigkeit aufweist.

Bei durch einen Nassläufermotor angetriebenen Kreiselpumpen ist es bekannt, die Förderflüssigkeit vom Pumpenraum zum Raum innerhalb des Spaltrohrs durch Öffnungen der Trennwand zu führen, die diese beiden Räume voneinander trennt. Hierbei hat es sich gezeigt, dass beim Durchströmen der Durchflussöffnung in der Trennwand an der Durchflussöffnung Turbulenzen entstehen, die zu erheblichen Geräuschen mit hohen Frequenzen führen. Diese, Pfeiftönen ähnlichen Geräusche werden von den Pumpenbenutzern als störend empfunden.

Aus der DE 38 03 774 A1 ist eine Nassläufer-Kreiselpumpe bekannt, deren Trennwand zwischen Pumpenkammer und Spaltrohrinnenraum zahlreiche kleine Kanäle aufweist, die ähnlich einem Sieb Schmutzteile abfangen sollen. Hierbei sind die Kanäle in ihrem Durchmesser so klein gewählt, dass sie durch die Schmutzteile verstopfen sollen, damit ein Wasseraustausch zwischen der Pumpenkammer und dem Spaltrohrinnenraum nur über die Lagerspalte erfolgt.

Aufgabe der Erfindung ist es, eine Motorkreiselpumpe der eingangs genannten Art so zu verbessern, dass Geräusche an der Trennwand zwischen dem Pumpenraum und der Spaltrohrkammer nicht entstehen.

Diese Aufgabe wird durch eine Pumpe mit den Merkmalen gemäß Anspruch 1 gelöst.

Durch eine solche Ausführung gelingt es, die Strömung durch die Durchflussöffnung so zu gestalten, dass Geräusche erzeugende Verwirbelungen vermieden werden. Insbesondere kann hierdurch dafür gesorgt werden, dass insbesondere scharfe Kanten an der Durchflussöffnung nicht mehr bestehen, die Geräusche schaffende Verwirbelungen erzeugen. Außerdem wird die Wechselwirkung dieser Verwirbelungen mit der gegenüber liegenden Kante vermieden, die Druckpulsationen in der Durchflussöffnung anregen kann.

Besonders vorteilhaft ist hierbei auch, wenn zumindest der der Strömung zuerst ausgesetzte Rand der Durchflussöffnung eine Fase aufweist und/oder abgerundet ist. Die obengenannten Vorteile sind besonders vorhanden, wenn der Durchmesser der Durchflussöffnung an ihrer engsten Stelle 1 bis 3 mm beträgt.

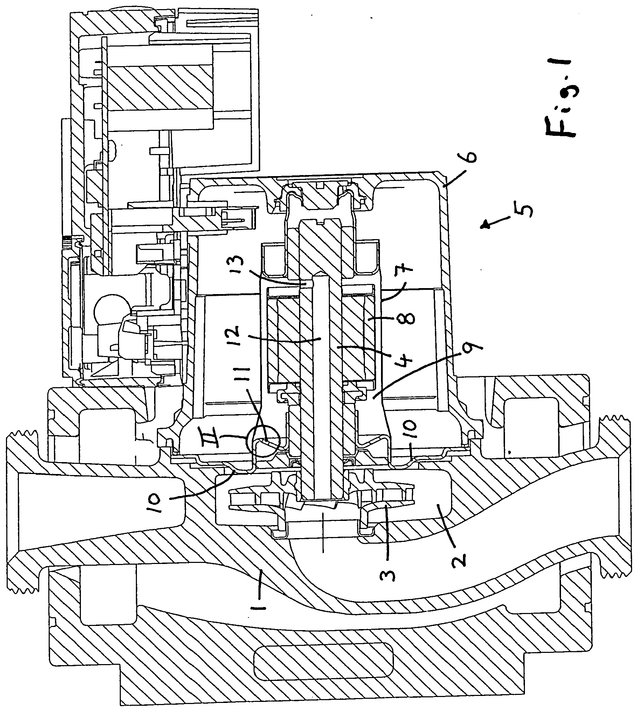

Drei Beispiele die kein Teil der Erfindung sind, und ein Ausführungsbeispiel der Erfindung sind in den Zeichnungen darstellt und werden im Folgenden näher beschrieben. Es zeigen
- Fig. 1: einen axialen Schnitt durch eine Motorkreiselpumpe,
- Fig. 2: den vergrößerten Ausschnitt II in Fig. 1,
- Fig. 3: einen Querschnitt durch eine Durchflussöffnung mit einer Abfasung der Eingangskante,
- Fig. 4: einen Querschnitt durch eine Durchflussöffnung mit einer abgerundeten Eingangskante,
- Fig. 5: einen Querschnitt durch eine Durchflussöffnung gemäß der Erfindung , mit einem in zwei Richtungen verbogenen Öffnungsrand.

Eine Motorkreiselpumpe weist ein Pumpengehäuse 1 auf, die einen Pumpenraum 2 bildet, in dem ein Laufrad 3 gelagert ist. Das Laufrad ist an einem Ende einer Welle 4 befestigt, die aus einem Nassläufer-Elektromotor 5 herausragt, der mit seinem Gehäuse 6 am Pumpengehäuse 1 seitlich koaxial befestigt ist.

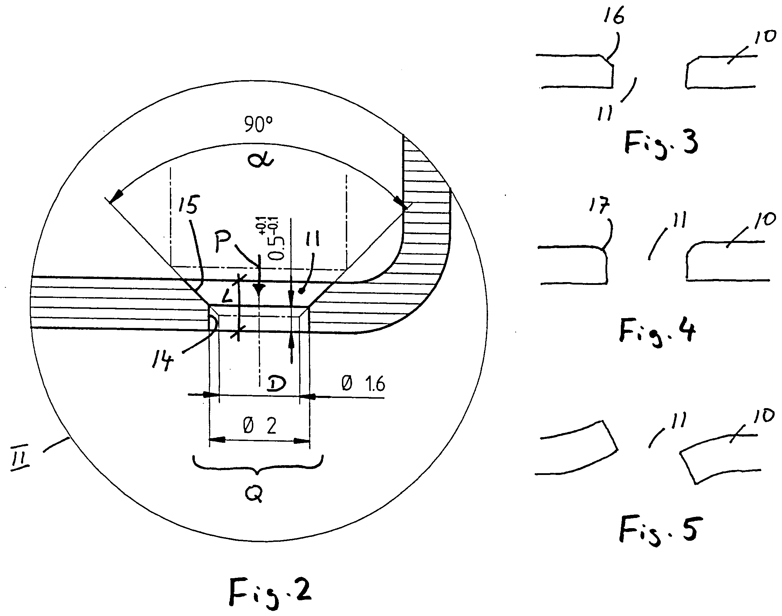

Das Spaltrohr 7 des Motors umschließt den auf der Welle 4 sitzenden Motorenrotor 8 und bildet eine Spaltrohrkammer 9, die durch eine Trennwand 10 vom Pumpenraum 2 abgeschlossen ist. In der Trennwand 10 befindet sich mindestens eine Durchflussöffnung 11, durch die das Fördermedium aus dem Pumpenraum 2 in die Spaltrohrkammer 9 in Richtung des Pfeiles P (Fig. 2) strömt. Für den Rückfluss aus der Kammer 9 in den Raum 2 ist durch mindestens eine weitere Durchflussrückströmöffnung oder durch einen in der Welle 4 angeordneten Längskanal 12 in der Welle 4 gesorgt, wobei im letzteren Fall der Kanal 12 mit der Kammer 9 über eine radiale Bohrung 13 in der Welle 4 verbunden ist.

Die Trennwand 10 besteht aus einem Blech oder Kunststoff und die in der Trennwand 10 angeordnete Durchflussöffnung 11 ist in den Fig. 2 bis 5 vergrößert im Querschnitt dargestellt. Im Beispiel nach Fig. 2 weist die Durchflussöffnung 11 über die Hälfte der Länge L der Öffnungswand 14 eine konische Form auf, wobei dieser zur Öffnungsachse koaxiale Konus 15 im Ausführungsbeispiel einen Winkel α = 60 bis 120 Grad vorzugsweise von 80 bis 100 Grad insbesondere von 90 Grad bildet und hierbei der Querschnitt Q der Durchflussöffnung im Bereich des Konus 15 in Strömungsrichtung des Pfeils P und damit vom Pumpenraum zur Spaltrohrkammer hin abnimmt. Der Durchmesser D der Durchflussöffnung 11 ist an ihrer engsten Stelle größer 0,5 mm, insbesondere 1 bis 3 mm.

In einer nicht dargestellten Ausführung ist ein zweiter Konus auf Seite der Spaltrohrkammer an der Durchflussöffnung 11 angeordnet, der sich in Strömungsrichtung zur Spaltrohrkammer hin erweitert. In dem Beispiel nach Fig. 3 weist die Eingangskante der Durchflussöffnung 11 eine Abfasung bzw. eine Fase 16 auf. Im Beispiel nach Fig. 4 ist die Eingangskante mit einer Abrundung 17 versehen.

In dem einzigen Ausführungsbeispiel nach Fig. 5 sind zwei einander gegenüberliegende Seiten der Durchflussöffnung in entgegengesetzte Richtungen so verbogen, dass ein Wandungsbereich der Durchflussöffnung 11 in den Pumpenraum 2 und der gegenüberliegende Bereich in die Spaltrohrkammer 9 ragt. Hierdurch wird eine gegenseitige Wechselwirkung der gegenüberliegenden Kanten der Durchflussöffnung bezüglich Verwirbelungen vermieden, so dass Geräusche erzeugende Druckpulsationen nicht entstehen.

## Patentansprüche

1. Motorkreiselpumpe mit einem im Pumpenraum (2) gelagerten Laufrad (3), das auf der Elektromotorenwelle (4) sitzt, wobei der Motorenrotor (8) in einer Spaltrohrkammer (9) einliegt, die von der Förderflüssigkeit durchströmt ist, und der Pumpenraum (2) von der Kammer (9) durch eine Trennwand (10) getrennt ist, die mindestens eine Durchflussöffnung (11) für die Förderflüssigkeit aufweist, wobei die Größe des Querschnitts der Durchflussöffnung (11) von dem Pumpenraum (2) zur Spaltrohrkammer (9) abnimmt und/oder zunimmt, **dadurch gekennzeichnet, dass** der Durchmesser (D) der Durchflussöffnung (11) an ihrer engsten Stelle größer als 0,5mm ist, wobei im Bereich der Durchflussöffnung (11) die Trennwand (10) in einer Weise verbogen ist, dass die Wandung (14) der Durchflussöffnung (11) mit einem Teilbereich in den Pumpenraum (2) und mit einem gegenüberliegenden zweiten Bereich in die Spaltrohrkammer (9) ragt.

2. Pumpe nach Anspruch 1, **dadurch gekennzeichnet, dass** zumindest der der Strömung (P) zuerst ausgesetzte Rand der Durchflussöffnung (11) eine Fase (16) aufweist und/oder abgerundet ist.

3. Pumpe nach einem der vorherigen Ansprüche, **dadurch gekennzeichnet, dass** der Durchmesser (D) der Durchflussöffnung (11) an ihrer engsten Stelle 1 bis 3 mm beträgt.

## Claims

1. Motor centrifugal pump with an impeller (3) supported in the pump chamber (2) and seated on the shaft (4) of the electric motor, the motor rotor (8) being located in a can chamber (9) through which the pumped liquid flows, and the pump chamber (2) being separated from the chamber (9) by a partition wall (10) which has at least one flow opening (11) for the pumped liquid, wherein the size of the cross-section of the flow opening (11) decreases and/or increases from the pump chamber (2) to the can chamber (9), **characterized in that** the diameter (D) of the flow opening (11) at its narrowest point is greater than 0.5 mm, wherein in the region of the flow opening (11) the partition wall (10) is bent in such a way that the perimeter of the flow opening (11) projects with a partial area into the pump chamber (2) and with an opposite second area into the can chamber (9).

2. A pump according to claim 1, **characterised in that** at least the edge of the flow opening (11) first exposed to the flow (P) has a chamfer (16) and/or is rounded.

3. A pump according to one of the previous claims, **characterized in that** the diameter (D) of the flow opening (11) is 1 to 3 mm at its narrowest point.

## Revendications

1. Pompe centrifuge à moteur avec une roue (3) supportée dans la chambre de pompe (2) et placée sur l'arbre (4) du moteur électrique, le rotor du moteur (8) étant situé dans une chambre de boîte (9) traversée par le liquide pompé, et la chambre de pompe (2) étant séparée de la chambre (9) par une paroi (10) de séparation qui présente au moins une ouverture d'écoulement (11) pour le flux du liquide pompé, dans laquelle la taille de la section transversale de l'ouverture d'écoulement (11) diminue et/ou augmente de la chambre de pompe (2) à la chambre de boîte (9), **caractérisé en ce que** le diamètre (D) de l'ouverture d'écoulement (11) à son point le plus étroit est supérieur à 0.5 mm, la paroi de séparation (10) dans la zone de l'ouverture d'écoulement (11) étant courbée de telle sorte que le périmètre de l'ouverture d'écoulement (11) dépasse avec une zone partielle dans la chambre de pompe (2) et avec une zone partielle opposée dans la chambre de boîte (9).

2. Pompe selon la revendication 1, **caractérisée en ce qu'**au moins le bord de l'ouverture d'écoulement (11) d'abord exposé au flux (P) présente un chanfrein (16) et/ou est arrondi.

3. Pompe selon l'une des revendications précédentes, **caractérisée en ce que** le diamètre (D) de l'ouverture d'écoulement (11) est de 1 à 3 mm à son point le plus étroit.
